# EUROPEAN PATENT APPLICATION

(11) **EP 4 553 767 A1**
(43) Date of publication of application: **14.05.2025**
(21) Application number: 24206438.4
(22) Date of filing: 14.10.2024
(51) Int. Cl.: G06T 7/579

(54) **SYSTEMS AND METHODS FOR LOW-COST HEIGHT ABOVE GROUND LEVEL AND TERRAIN DATA GENERATION**

(30) Priority: 07.11.2023 IN 202311075998; 04.01.2024 US 202418404654
(71) Applicant: Honeywell International Inc., Charlotte, NC 28202 (US)
(72) Inventor: RAJPAL, Avni, Charlotte, 28202 (US); SRIVASTAVA, Romi, Charlotte, 28202 (US); GANAPATHY, Ashwin, Charlotte, 28202 (US); JYOTHIKUMAR, Arjun Bindu, Charlotte, 28202 (US)
(74) Representative: Haseltine Lake Kempner LLP

(57) **Abstract**

Systems and methods for low-cost HAGL measurement and terrain database updates are provided. In one example, a system includes an image capturing device configured to capture first and second images and a navigation system configured to generate pose data. The system further includes processor(s) communicatively coupled to the image capturing device and the navigation system and a non-transitory, computer-readable medium communicatively coupled to the processor(s) that stores instruction(s) which, when executed by the processor(s), cause the processor(s) to: estimate optical flow between the first and second images; determine rigid flow per image for each depth bin of a group of depth bins based on the pose data, wherein each depth bin corresponds to a particular depth range; and generate a dense depth map by determining a depth bin, for each pixel, that minimizes a difference between the estimated optical flow and the determined rigid flow for the respective pixel.

## Description

### CROSS-REFERENCE TO RELATED APPLICATION

This application claims priority to Indian Provisional Patent Application No. 202311075998, filed on November 7, 2023, and titled "SYSTEMS AND METHOD FOR LOST-COST HEIGHT ABOVE GROUND LEVEL AND TERRAIN DATA GENERATION," the contents of which are incorporated herein by reference in their entirety.

### BACKGROUND

Manned and unmanned aircraft require height above ground level (HAGL) information for safe operations during takeoff, descent, and landing phases and during low altitude cruise phase. For autonomous systems, the availability of HAGL with integrity is critical for safe operations. Current solutions use different sensors (for example, RADAR, LIDAR, and laser-based range finders) for obtaining HAGL, but these systems generally only provide acceptable performance for a few hundred meters of altitude and sensors with increased range are very high cost. Further, current radar altimeters or laser-based range finders include active sensors that emit signals in a radio frequency band. These emitted signals can cause interference with other systems in the area (for example, telecommunications systems such as 5G base stations) and can be detected by other systems.

For the reasons above, and for other reasons provided below, improved techniques for obtaining HAGL measurements and terrain data are needed for aircraft.

### SUMMARY

In one aspect, a system comprises an image capturing device configured to capture a first image and a second image. The system further comprises a navigation system configured to generate pose data. The system further comprises one more processors communicatively coupled to the image capturing device and the navigation system. The system further comprises a non-transitory, computer readable medium communicatively coupled to the one or more processors, wherein the non-transitory, computer readable medium stores one or more instructions which, when executed by the one or more processors, cause one or more processors to: estimate an optical flow between the first image and the second image; determine a rigid flow per image for each depth bin of a group of depth bins based on the pose data, wherein each depth bin corresponds to a particular depth range; and generate a dense depth map by determining a depth bin for each pixel that minimizes a difference between the estimated optical flow and the determined rigid flow for the respective pixel.

In another aspect, a system comprises one or more inputs communicatively coupled to an image capturing device and a navigation system. The system further includes one or more processors. The system further comprises a non-transitory, computer readable medium communicatively coupled to the one or more processors, wherein the non-transitory, computer readable medium stores one or more instructions which, when executed by the one or more processors, cause one or more processors to: estimate an optical flow between a first image and the second image received from the image capturing device; determine a rigid flow per image for each depth bin of a group of depth bins based on pose data received from the navigation system, wherein each depth bin corresponds to a particular depth range; determine a depth bin for each pixel that minimizes a difference between the estimated optical flow and the determined rigid flow for the respective pixel; and generate a dense depth map based on the depth bin determined for each pixel.

In another aspect, a method comprises capturing a first image and a second image. The method further includes generating first pose data corresponding to the first image and second pose data corresponding to the second image. The method further comprises estimating an optical flow between the first image and the second image. The method further comprises determining a rigid flow per image for each depth bin of a plurality of depth bins. The method further comprises determining a depth bin of the plurality of depth bins for each respective pixel of a plurality of pixels that minimizes a difference between the estimated optical flow and the determined rigid flow for the respective pixel. The method further comprises generating a dense depth map based on the determined depth bin for the plurality of pixels.

### BRIEF DESCRIPTION OF THE DRAWINGS

Embodiments of the present invention can be more easily understood and further advantages and uses thereof more readily apparent, when considered in view of the description and the following figures in which:
FIG. 1 is a block diagram of an example system;
FIG. 2 is a diagram of an example dense depth map;
FIG. 3 is a flow diagram of an example method of generating a dense depth map;
FIG. 4 is diagram of an example method of determining rigid flow; and
FIG. 5 is a flow diagram of an example method of generating an HAGL measurement from a dense depth map.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Many types of aircraft (manned and unmanned) are equipped with autonomy subsystems and include a downward facing camera as part of the platform. The systems and methods described herein can leverage these already available features of an aircraft to provide a low-cost, passive system that can be used for dense depth map generation, HAGL estimation, and terrain database updates. These features can be used for a number of applications such as, for example, a real-time HAGL sensor, terrain collision avoidance systems, real-time connected aircraft database updates, real-time analytics (for example, vegetation analysis, disaster management, etc.), and the like.

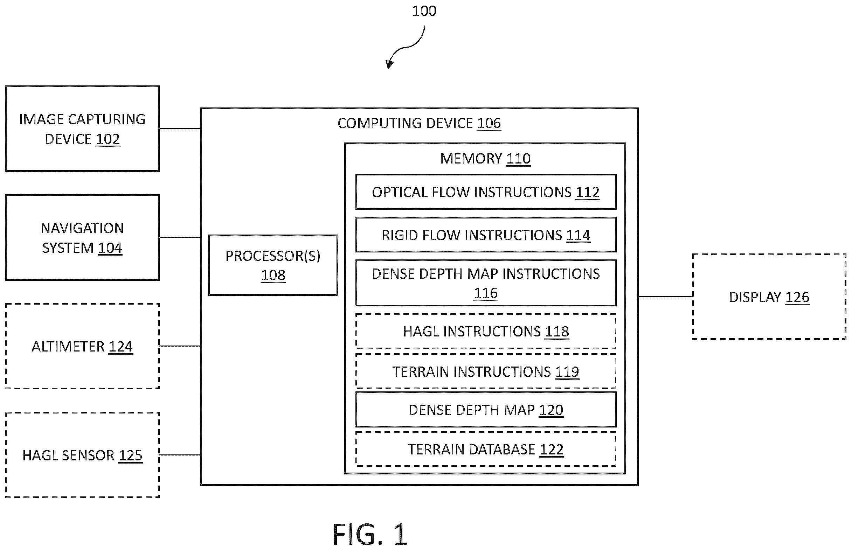

FIG. 1 is a block diagram of an example system 100 in which the techniques described herein can be implemented. In the example shown in FIG. 1, the system 100 includes various components, including an image capturing device 102, a navigation system 104, and a computing device 106, which includes one or more processors 108 and at least one memory 110. While a particular number of components are shown in FIG. 1, it should be understood that this is an example and that a different number of image capturing devices 102, navigation systems 104, and computing devices 106 or components thereof could also be included.

In some examples, the system 100 is included in or on a vehicle. In such examples, the vehicle may include an aircraft, and an aircraft is referenced to explain some of the principles described throughout the disclosure. However, the term vehicle is intended to include all such vehicles falling within the ordinary meaning of the term as understood by one having ordinary skill in the art, which includes, but is not limited to, aerial traversing vehicles (for example, commercial, non-commercial, or recreational aircraft), unmanned vehicles (for example, drones, urban air mobility vehicles), and space traversing vehicles.

In the example shown in FIG. 1, the image capturing device 102 is communicatively coupled to the computing device 106. In some examples, the image capturing device 102 is a camera. In some such examples, the image capturing device 102 is a monocular camera or a multi-spectral camera. In other examples, the image capturing device 102 is an infrared (IR) sensor. It should be understood that other types of cameras or sensors could also be used.

The image capturing device 102 is configured to capture images of the environment in the frame of view of the image capturing device 102. The image capturing device 102 is configured to capture images at a sample rate while the image capturing device 102 (and the vehicle that includes the image capturing device 102) is in motion. In some examples, the sample rate is adjustable and can be adjusted based on a number of factors including, but not limited to, speed, location, obstacles, phase of travel, etc. of the vehicle that includes the image capturing device 102. In some examples, the sample rate is adjusted such that consecutively captured images overlap by at least fifty percent. In some examples, the sample rate can be adjusted by the one or more processors 108. In other examples, a different processor or controller is used to adjust the sample rate of the image capturing device 102.

For ease of description, the image capturing device 102 will be discussed in the context of a first image and a second image that are captured by the image capturing device 102. It should be understood that the terms first image and second image can apply to any two images that are consecutively captured by the image capturing device 102 or that have sufficient correspondence (for example, overlap by approximately fifty percent) such that they can be meaningfully processed using the techniques described herein. For example, a first image can be processed with the second image and separately processed with a third image that also has sufficient correspondence with the first image.

The image capturing device 102 is configured to capture a first image at a first time and first pose and a second image at a second time different from the first time and a second pose that is different than the first pose. The image capturing device 102 is configured to provide the first image and the second image to the computing device 106 for further processing as described herein.

In the example shown in FIG. 1, the navigation system 104 is also communicatively coupled to the computing device 106. In some examples, the navigation system 104 is configured to determine position and rotation values for the system 100 or a vehicle that includes the system 100 as a function of time. In some examples, the navigation system 104 is configured to receive Global Navigation Satellite System (GNSS) and Inertial Measurement Unit (IMU) inputs and output pose data for the system 100, or a vehicle that includes the system 100, as a function of time. In some such examples, the pose data includes a position estimate and rotations (or orientation) determined using a Kalman filter or other navigation filter. In the context of the system 100, the navigation system 104 is configured to output first pose data for the system 100 corresponding to the first time that first image was captured by the image capturing device 102. Similarly, the navigation system 104 is configured to output second pose data for the system 100 corresponding to the second time that the second image was captured by the image capturing device 102. The first pose data and the second pose data are likely to be in the frame of the body of a vehicle that includes the system 100.

In the example shown in FIG. 1, the computing device 106 includes the one or more processors 108 and the at least one memory 110. The one or more processors 108 are communicatively coupled to the image capturing device 102, the navigation system 104, and the at least one memory 110. The one or more processors 108 are configured to execute a variety of instructions stored on the at least one memory 110, which cause the one or more processors 108 to implement the techniques and methods described herein.

In the example shown in FIG. 1, the at least one memory 110 includes optical flow instructions 112. The one or more processors 108 are configured to execute the optical flow instructions 112 in order to estimate an optical flow between the first image and the second image captured by the image capturing device 102. In some examples, the estimated optical flow indicates the apparent motion of features in the second image compared to the first image, which is caused by the relative motion of the system 100 with respect to the environment that is captured in the first and second images. The optical flow instructions 112 utilized by the system 100 can include any suitable technique for estimating optical flow between two images known in the field.

The accuracy of the optical flow estimated by the one or more processors 108 executing the optical flow instructions 112 is determined based on the sample rate of the image capturing device 102 and the accuracy of the particular optical flow instructions 112 utilized. If more accuracy is required for a particular system 100, then the sample rate of the image capturing device 102 can be increased such that the first image and the second image have a greater percentage of overlap and the particular optical flow instructions 112 selected can be chosen to have an increased accuracy. It should be understood that the sample rate of the image capturing device 102 and optical flow instructions 112 would also be selected based on the available resources (computing, memory, etc.) available for the system 100.

In the example shown in FIG. 1, the at least one memory 110 includes rigid flow instructions 114. The one or more processors 108 are configured to execute the rigid flow instructions 114 in order to determine a rigid flow per image for each depth bin of a plurality of depth bins, which are discussed in more detail below.

In some examples, when executing the rigid flow instructions 114, the one or more processors 108 are configured to determine a difference between the first pose and the second pose using the first pose data and the second pose data from the navigation system 104. This determination provides an indication of how much motion has occurred between the first pose of the image capturing device 102 and the second pose of the image capturing device 102. In some examples, the difference between the first pose and the second pose is referred to as an incremental pose.

In some examples, when executing the rigid flow instructions 114, the one or more processors 108 are configured to translate pose data output by the navigation system 104 from the frame of a body of a vehicle that includes the image capturing device 102 to the frame of the image capturing device 102. In some examples, the translation is based on a known, fixed relationship between the image capturing device 102 and the body of the vehicle. In some examples, the known, fixed relationship between the image capturing device 102 and the body of the vehicle is determined during calibration of the system 100.

For a given pixel in the second image, it is not clear what depth should be associated with the pixel for the dense depth map 120. When executing the rigid flow instructions 114, the one or more processors 108 are configured to propose depth hypotheses for each pixel based on each depth bin of the plurality of depth bins. For each different depth hypothesis, a different rigid flow is computed using the pose information and the depth hypothesis for a given pose. The depth values used for the rigid flow determination are provided with the depth hypothesis proposals (depth bins) and the rotation/position transformation is provided from the navigation system 104.

In some examples, each of the depth bins used for a hypothesis define a range of depth values within a depth range. The depth range is the complete range of potential values for the depth that will be evaluated. The depth range is defined by the lowest depth value and the highest depth value. The depth range is divided into different depth bins for evaluation. In some examples, the total depth range is divided into equally sized depth bins. In other examples, the total depth range is divided into depth bins of different sizes. In any case, the depth bins are defined by a lowest depth bin value and a highest depth bin value.

In some examples, the total depth range, the size of individual depth bins, the number of depth bins, and/or the depth values covered by each depth bin are selected based on one or more previous HAGL measurements. In some such examples, the previous HAGL measurement is determined by computing device 106 using the techniques discussed herein. In some examples, the previous HAGL measurement is provided by an altimeter 124 and/or HAGL sensor 125 communicatively coupled to the computing device 106. In some examples, the most recent previous HAGL measurement can be used as the center of the depth range. In other examples, a trend or average of multiple previous HAGL measurements can be used to define the center of the depth range.

One example scenario is where the previous HAGL measurement is 1000m above ground level, the depth range is 200m, and the number of depth bins is 20. If the depth range is equally divided into the 20 depth bins, then each depth bin has a range of 20m with the lowest range depth bin ranging from 800m to 820m and the highest range depth bin ranging from 1180m to 1200m. Other factors such as, for example, desired/required accuracy, sample rate of the image capturing device 102, speed of vehicle that includes the system 100, available resources, etc. can also be used to select the depth range and/or the number of depth bins.

In other examples, no prior known information is utilized by the one or more processors 108 when executing the rigid flow instructions 114. Such examples will likely take longer to complete because a wider range of depths and greater number of depth bins need to be evaluated. By selecting the depth range and/or the number of depth bins, the starting point for the evaluation is more targeted and the resolution can improve compared to the examples where no prior known information is utilized.

In the example shown in FIG. 1, the at least one memory 110 includes dense depth map instructions 116. When executing the dense depth map instructions 116, the one or more processors 108 are configured to, for each pixel of the second image, determine the particular depth bin that minimizes the difference between the estimated optical flow and the determined rigid flow for that pixel. In some examples, each depth bin is associated with a different depth value that is unique to that particular depth bin. The depth value associated with the particular depth bin that is determined to minimize the difference between the estimated optical flow and the determined rigid flow for a respective pixel is then used for the respective pixel when generating the dense depth map 120. In general, the dense depth map 120 captures the depth per pixel, which corresponds to the perpendicular distance of a point on the ground to the image plane of the image capturing device 102.

In some examples, the one or more processors 108 are configured to determine the depth bin that minimizes the difference between the estimated optical flow and the determined rigid flow the depth bin for at least two pixels in parallel, which can increase computational efficiency. In some examples, the one or more processors 108 are configured to determine the depth bin that minimizes the difference between the estimated optical flow and the determined rigid flow the depth bin for at least two pixels sequentially. It should be understood that the one or more processors 108 can be configured to use a combination of parallel or sequential processing to determine the depth bins based on available resources.

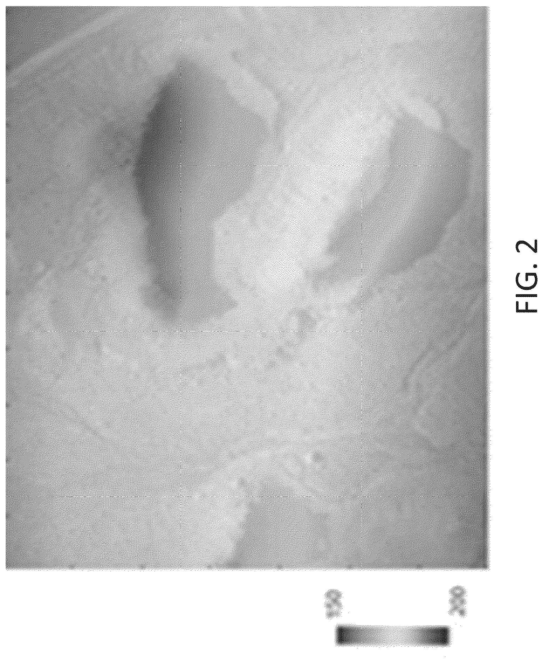

In some examples, the dense depth map 120 produced by the one or more processors 108 when executing the dense depth map instructions 116 is in the frame of the image capturing device 102. The dense depth map 120 includes all of the pixels of the second image that are evaluated, and the characteristic of each of the pixels corresponds to the characteristics of the particular depth bin. In some examples, the dense depth map 120 is stored in the at least one memory 110 for future use or future reference. In some examples, the computing device 106 is configured to display the dense depth map 120 on a display 126 communicatively coupled to the computing device 106. An example dense depth map 120 displayed on a display 126 is shown in FIG. 2.

In general, the greater the number of depth bins that need to be evaluated for each pixel, the longer the evaluation will take. If, for example, there is a shortage of available resources or a situation where accuracy and precision are paramount (for example, when the system 100 is close to the ground), then adjustments to the depth range and/or the number of depth bins may be needed. In some examples, if the previous HAGL measurement is below a first threshold value (for example, associated with an increased risk of obstacles or hitting the ground), the depth range is decreased and/or the number of depth bins is increased, which will increase the accuracy and precision of the evaluation but increase computational load due to a more exhaustive evaluation. Similarly, if the previous HAGL measurement is above a second threshold value (for example, associated with a decreased risk of obstacles or hitting the ground), the depth range is increased and/or the number of depth bins is decreased, which will decrease the accuracy and precision of the evaluation and reduce computational load. It should be understood that thresholds for other factors such as, for example, desired/required accuracy, sample rate of the image capturing device 102, speed of vehicle that includes the system 100 can be used to make similar changes to the depth range and/or number of depth bins as well.

In some examples, the at least one memory 110 optically includes HAGL instructions 118. In such examples, the one or more processors 108 are configured to execute the HAGL instructions 118 in order to determine a HAGL of a vehicle that includes the system 100. When executing the HAGL instructions 118, the one or more processors 108 are configured to generate a translated dense depth map by translating the dense depth map 120 from the frame of the image capturing device 102 to a frame of a body of the vehicle that includes the image capturing device 102. In some examples, the translation of the dense depth map 120 to the frame of the body of the vehicle is based on a known, fixed relationship between the image capturing device 102 and the body of the vehicle. In some examples, the known, fixed relationship between the image capturing device 102 and the body of the vehicle is determined during calibration of the system 100.

When executing the HAGL instructions 118, the one or more processors 108 are further configured to determine a depth (or depth bin) for a center pixel of the translated dense depth map. In some examples, determining the depth for the center pixel of the translated dense depth map includes determining the depth value of the center pixel that is associated with a depth bin.

When executing the HAGL instructions 118, the one or more processors 108 are further configured to convert the depth for the center pixel of the translated dense depth map into a HAGL measurement. As discussed above, the depth bins are associated with a particular range of depths defined by the lowest depth bin value and the highest depth bin value. In some examples, the HAGL measurement generated by the one or more processors 108 when executing the HAGL instructions 118 corresponds to the value in the center of the depth bin. In some such examples, the error on the HAGL measurement corresponds to the absolute value of the difference between the center value and the lowest depth bin value or the highest depth bin value for that particular depth bin.

In some examples, the at least one memory 110 optionally includes terrain instructions 119. In such examples, the one or more processors 108 are configured to execute the terrain instructions 119 in order to generate a terrain database 122 or to modify the terrain database 122.

In some examples, when executing the terrain instructions 119, the one or more processors 108 are configured to perform processes to aid real-time terrain database updates, which is suitable for real-time situational awareness, path planning, obstacle avoidance, and/or emergency landing. In such examples, the one or more processors 108 are configured to transmit the dense depth map 120 along with associated pose data to a land receiver via a wireless communication link (for example, a satellite communication link). The dense depth map 120 and pose data can be pushed or otherwise transmitted to connected aircraft in the region and terrain databases can be modified in view of the dense depth map 120 and the pose data if there is a difference between the terrain data stored in the terrain database and the dense depth map 120.

In some examples, when executing the terrain instructions 119, the one or more processors 108 are configured to perform processes to aid offline terrain database updates, which are suitable for subsequent missions. In such examples, the one or more processors 108 are configured to transmit the dense depth map 120 along with associated pose data to a land receiver via a wired communication link (for example, Ethernet cable) or a wireless communication link (for example, a WiFi or cellular communication link). The dense depth map 120 and pose data can then be loaded into terrain database (for example, terrain database 122) onboard vehicles prior to subsequent missions.

In some examples, the system 100 further includes the altimeter 124 and/or the HAGL sensor 125. In such examples, the altimeter 124 can include a radar altimeter or another alternative type of altimeter, and the HAGL sensor 125 can include a laser range finder or another alternative type of sensor. The HAGL measurement generated by the one or more processors 108 when executing the HAGL instructions 118 can be used to evaluate the HAGL measurement generated using the altimeter 124 and/or the HAGL sensor 125. For example, the accuracy of the HAGL measurement generated using the altimeter 124 and/or the HAGL sensor 125 can be compared with the HAGL measurement generated by the one or more processors 108. In some examples, the HAGL measurement generated by the one or more processors 108 when executing the HAGL instructions 118 can be used in combination with the HAGL measurement generated using an altimeter 124 and/or HAGL sensor 125. For example, the HAGL measurement generated using the altimeter 124 and/or HAGL sensor 125 can be combined with the HAGL measurement generated by the one or more processors 108 in a Kalman filter or other navigation filter to increase the accuracy and reliability of the HAGL measurement.

In some examples, the image capturing device 102 is configured to capture a third image at a third time different than the first and second times and at a third pose that is different from the first and second poses. In some such examples, similar processing to that described herein can be performed for the first image and the third image. In some examples, post-processing is performed and the depth for particular points can be compared based on the depth estimation determined using the first and second images and the depth estimation determined using the first and third images. If there is a match between the depth estimations for a particular point, then the depth estimation can be considered verified since the same depth estimation was produced using distinct combinations of images. However, if there is a mismatch between the depth estimations for a particular point, then the depth estimation can be deleted since there is inconsistency in the depth estimations. In some examples, the amount of mismatch is compared to a threshold to determine whether the amount of mismatch is sufficient to indicate that the depth estimations should be deleted. Using the post-processing as described above results in a more robust solution either by retaining one of the depth estimations or by judicious combination of the depth estimations.

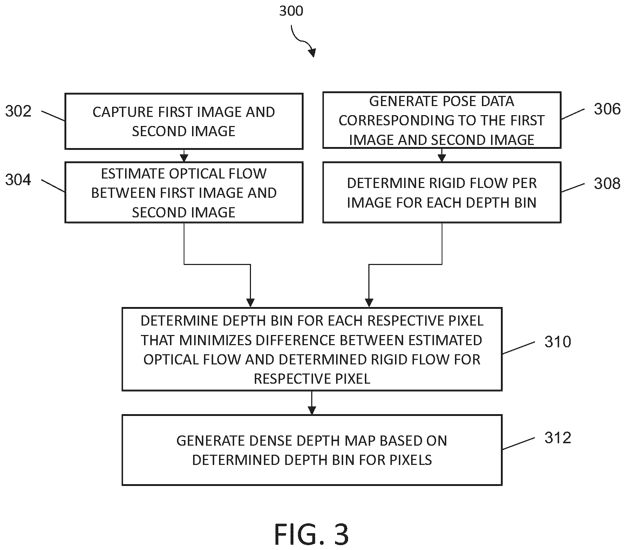

FIG. 3 illustrates a flow diagram of an example method 300 of generating a dense depth map. The common features discussed above with respect to the example system in FIG. 1 can include similar characteristics to those discussed with respect to method 300 and *vice versa.* In some examples, the blocks of the method 300 are performed by system 100 described above.

The blocks of the flow diagram in FIG. 3 have been arranged in a generally sequential manner for ease of explanation; however, it is to be understood that this arrangement is merely exemplary, and it should be recognized that the processing associated with method 300 (and the blocks shown in FIG. 3) can occur in a different order (for example, where at least some of the processing associated with the blocks is performed in parallel in an event-driven manner).

The method 300 includes capturing a first image and a second image (block 302). The first image and the second image are captured with the same image capturing device but at different times. For example, the first image can be captured at a first time using the image capturing device and the second image can be captured at a second time using the image capturing device. In some examples, the image capturing device is a monocular camera or a multi-spectral camera. In other examples, the image capturing device is an infrared (IR) sensor or other type of sensor.

The method 300 further includes estimating optical flow between the first image and the second image (block 304). In some examples, estimating the optical flow between the first image and the second image includes an indication the apparent motion of features in the second image compared to the first image, which is caused by the relative motion of the system with respect to the environment that is captured in the first and second images. In some examples, the estimation of optical flow is determined using any suitable technique known in the field.

The method 300 further includes generating pose data corresponding to the first image and the second image (block 306). In some examples, the pose data is generated by a navigation system or navigation filter. The pose data corresponding to the first image can be the pose of a vehicle that includes the image capturing device at the time the first image was captured. Similarly, the pose data corresponding to the second image can be the pose of a vehicle that includes the image capturing device at the time the second image was captured.

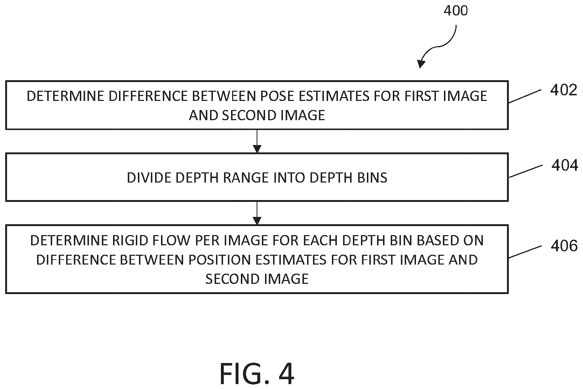

The method 300 further includes determining a rigid flow per image for each depth bin (block 308). In some examples, determining a rigid flow includes proposing depth hypotheses for each pixel in the second image where each depth hypothesis is represented by a depth bin. Further details on this step are provided with respect to FIG. 4 below.

The method 300 further includes determining a depth bin for each respective pixel that minimizes a difference between the estimated optical flow and the determined rigid flow for the respective pixel (block 310). In some examples, determining a depth bin for each respective pixel includes determining the depth bins in parallel for at least two of the pixels. In some examples, determining a depth bin for each respective pixel includes determining the depth bins sequentially for at least two of the pixels.

The method 300 further includes generating a dense depth map based on the determined depth bins for each of the pixels (block 312). In some examples, the dense depth map includes each respective pixel of the second image having a depth value associated with the determined depth bin for that respective pixel. For example, the depth value can be the center value of the range of values represented by the depth bin.

FIG. 4 illustrates a flow diagram of an example method 400 of determining rigid flow. The common features discussed above with respect to the example system in FIG. 1 can include similar characteristics to those discussed with respect to method 400 and *vice versa.* In some examples, the blocks of the method 400 are performed by system 100 described above.

The blocks of the flow diagram in FIG. 4 have been arranged in a generally sequential manner for ease of explanation; however, it is to be understood that this arrangement is merely exemplary, and it should be recognized that the processing associated with method 400 (and the blocks shown in FIG. 4) can occur in a different order (for example, where at least some of the processing associated with the blocks is performed in parallel in an event-driven manner).

The method 400 includes determining a difference between pose estimates for the first image and the second image (block 402). In some examples, determining the difference between pose estimates includes an indication of how much motion has occurred between a first pose of the image capturing device when the first image was taken and the second pose of the image capturing device when the second image was taken. In some examples, the pose data provided by a navigation system or navigation filter is translated to the camera frame from a frame of the body of the vehicle that includes the camera in order to make this determination.

The method 400 further includes dividing a depth range into depth bins (block 404). In some examples, the depth range defines the entire range of depth evaluated. The depth bins include smaller ranges of depth values to be evaluated within the depth range. In some examples, the depth range is equally divided among N depth bins. In other examples, the depth range is divided unequally among N depth bins based on the desired accuracy or precision, previous height above ground level measurements, or similar factors that can impact the needed resolution of the dense depth map.

The method 400 further includes determining a rigid flow per image for each depth bin based on the difference between pose estimates for the first image and the second image (block 406). In some examples, determining a rigid flow per image includes determining the movement of rigid objects from the first image to the second image. By using the difference between the pose estimates for the first image and the second image, the movement in the pixel coordinate system can be correlated to the movement in, for example, the GPS coordinate system.

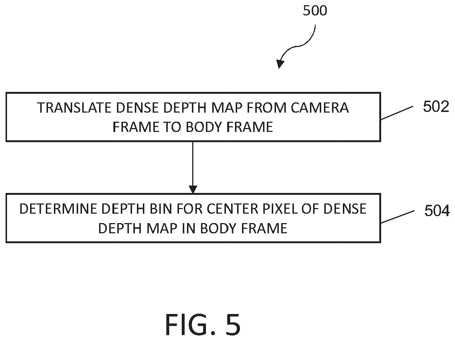

FIG. 5 illustrates a flow diagram of an example method 500 of generating an height above ground level measurement from a dense depth map. The common features discussed above with respect to the example system in FIG. 1 can include similar characteristics to those discussed with respect to method 500 and *vice versa.* In some examples, the blocks of the method 500 are performed by system 100 described above.

The blocks of the flow diagram in FIG. 5 have been arranged in a generally sequential manner for ease of explanation; however, it is to be understood that this arrangement is merely exemplary, and it should be recognized that the processing associated with method 500 (and the blocks shown in FIG. 5) can occur in a different order (for example, where at least some of the processing associated with the blocks is performed in parallel in an event-driven manner).

The method 500 further includes translating the dense depth map from the camera frame to a body frame (block 502). In some examples, the translation of the dense depth map to the frame of the body of the vehicle is based on a known, fixed relationship between the image capturing device and the body of the vehicle. In some examples, the known, fixed relationship between the image capturing device and the body of the vehicle is determined during calibration of the system.

The method 500 further includes determining a depth for a center pixel of the dense depth map in the body frame (block 504). In some examples, determining the depth for the center pixel of the translated dense depth map includes determining the depth value of the center pixel that is associated with a depth bin.

By using the techniques described herein, the systems and methods provide a low-cost solution that can be used for dense depth map generation, which is applicable to height above ground level estimation, terrain database updates, landing zone detection, obstacle avoidance, and the like. The systems and methods are passive, and thus can be used in environments where active systems and methods are undesirable due to being detectable (for example, in combat zones) or causing interference (for example, with cellular systems). The systems and methods described herein also provide consistent performance at higher elevations (for example, up to 3000m or beyond) than traditional sensor-based techniques.

In various aspects, system elements, or examples described throughout this disclosure (such as the system, computing device, or components thereof, for example) may be implemented on one or more computer systems, field programmable gate array (FPGA), application specific integrated circuit (ASIC) or similar devices comprising hardware executing code to realize those elements, processes, or examples, said code stored on a non-transient data storage device. These devices include or function with software programs, firmware, or other computer readable instructions for carrying out various methods, process tasks, calculations, and control functions, used in a distributed antenna system.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

The techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs).

### EXAMPLE EMBODIMENTS

Example 1 includes a system, comprising: an image capturing device configured to capture a first image and a second image; a navigation system configured to generate pose data; one more processors communicatively coupled to the image capturing device and the navigation system; and a non-transitory, computer readable medium communicatively coupled to the one or more processors, wherein the non-transitory, computer readable medium stores one or more instructions which, when executed by the one or more processors, cause one or more processors to: estimate an optical flow between the first image and the second image; determine a rigid flow per image for each depth bin of a group of depth bins based on the pose data, wherein each depth bin corresponds to a particular depth range; and generate a dense depth map by determining a depth bin for each pixel that minimizes a difference between the estimated optical flow and the determined rigid flow for the respective pixel.

Example 2 includes the system of Example 1, wherein the one or more instructions, when executed by the one or more processors, further cause the one or more processors to generate an image-based height above ground level measurement based on the dense depth map and the pose data by transforming the dense depth map from a camera frame to a body frame coordinate system.

Example 3 includes the system of any of Examples 1-2, wherein the one or more instructions, when executed by the one or more processors, further cause the one or more processors to generate terrain data based on the dense depth map and the pose data.

Example 4 includes the system of Example 3, wherein the one or more instructions, when executed by the one or more processors, further cause the one or more processors to update terrain data in a terrain database in real-time for situational awareness, path planning, obstacle avoidance, and/or emergency landing.

Example 5 includes the system of any of Examples 1-4, wherein the one or more instructions, when executed by the one or more processors, further cause the one or more processors to select the group of depth bins based on a previous height above ground level measurement.

Example 6 includes the system of any of Examples 2-5, wherein the system further comprises an altimeter or other height above ground level sensor configured to determine a second height above ground level measurement; wherein the one or more instructions, when executed by the one or more processors, further cause the one or more processors to: combine the image-based height above ground level measurement and the second height above ground level measurement; and/or compare the image-based height above ground level measurement and the second height above ground level measurement.

Example 7 includes the system of any of Examples 1-6, wherein the image capturing device, the navigation system, the one or more processors, and the non-transitory computer readable medium are positioned on a vehicle.

Example 8 includes the system of Example 7, wherein a sample rate of the image capturing device is adjusted based on a speed of the vehicle, a location of the vehicle, and/or a phase of travel.

Example 9 includes the system of any of Examples 1-8, wherein the image capturing device is further configured to capture a third image; wherein the one or more instructions, when executed by the one or more processors, further cause the one or more processors to: generate a second dense depth map based on a second optical flow and a second rigid flow determined using the first image, the third image, and pose data corresponding to the first image and the third image; comparing depth estimations for particular points in the dense depth map and the second dense depth map; and deleting or verifying or judiciously combining the depth estimations based on the comparison.

Example 10 includes the system of any of Examples 1-9, wherein the one or more processors are configured to determine respective depth bins for at least two pixels in parallel.

Example 11 includes a system, comprising: one or more inputs communicatively coupled to an image capturing device and a navigation system; one or more processors; and a non-transitory, computer readable medium communicatively coupled to the one or more processors, wherein the non-transitory, computer readable medium stores one or more instructions which, when executed by the one or more processors, cause one or more processors to: estimate an optical flow between a first image and a second image received from the image capturing device; determine a rigid flow per image for each depth bin of a group of depth bins based on pose data received from the navigation system, wherein each depth bin corresponds to a particular depth range; determine a depth bin for each pixel that minimizes a difference between the estimated optical flow and the determined rigid flow for the respective pixel; and generate a dense depth map based on the depth bin determined for each pixel.

Example 12 includes the system of Example 11, wherein the one or more instructions, when executed by the one or more processors, further cause the one or more processors to generate an image-based height above ground level measurement based on the dense depth map and the pose data by transforming the dense depth map from a camera frame to a body frame coordinate system.

Example 13 includes the system of any of Examples 11-12, wherein the one or more instructions, when executed by the one or more processors, further cause the one or more processors to generate terrain data based on the dense depth map and the pose data.

Example 14 includes the system of any of Examples 11-13, wherein the one or more instructions, when executed by the one or more processors, further cause the one or more processors to select the group of depth bins based on a previous height above ground level measurement.

Example 15 includes the system of any of Examples 11-14, wherein the one or more processors are configured to determine respective depth bins for at least two pixels in parallel.

Example 16 includes a method, comprising: capturing a first image and a second image; generating first pose data corresponding to the first image and second pose data corresponding to the second image; estimating an optical flow between the first image and the second image; determining a rigid flow per image for each depth bin of a plurality of depth bins; determining a depth bin of the plurality of depth bins for each respective pixel of a plurality of pixels that minimizes a difference between the estimated optical flow and the determined rigid flow for the respective pixel; and generating a dense depth map based on the determined depth bin for the plurality of pixels.

Example 17 includes the method of Example 16, further comprising: determining a difference between the first pose data corresponding to the first image and the second pose data corresponding to the second image; dividing a depth range into the plurality of depth bins; and determining the rigid flow per image for each depth bin of a plurality of depth bins based on the determined difference between the first pose data corresponding to the first image and the second pose data corresponding to the second image.

Example 18 includes the method of any of Examples 16-17, wherein the dense depth map is generated in a frame of an image capturing device, the method further comprising: translating the dense depth map from the frame of the image capturing device to a frame of a body of a vehicle to generate a translated dense depth map; and determining a depth bin for a center pixel of the translated dense depth map.

Example 19 includes the method of any of Examples 16-18, further comprising adjusting a sample rate for capturing a first image and a second image based on a speed of a vehicle, a location of the vehicle, and/or a phase of travel.

Example 20 includes the method of any of Examples 16-19, further comprising updating terrain data in a terrain database based on the dense depth map.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A system (100), comprising:
one or more inputs communicatively coupled to an image capturing device (102) and a navigation system (104);
one or more processors (108); and
a non-transitory, computer readable medium (110) communicatively coupled to the one or more processors (108), wherein the non-transitory, computer readable medium (110) stores one or more instructions (112, 114, 116) which, when executed by the one or more processors (108), cause one or more processors (108) to:
estimate an optical flow between a first image and a second image received from the image capturing device (102);
determine a rigid flow per image for each depth bin of a group of depth bins based on pose data received from the navigation system (104), wherein each depth bin corresponds to a particular depth range;
determine a depth bin for each pixel that minimizes a difference between the estimated optical flow and the determined rigid flow for the respective pixel; and
generate a dense depth map (120) based on the depth bin determined for each pixel.

2. The system (100) of claim 1, wherein the one or more instructions (118), when executed by the one or more processors (108), further cause the one or more processors (108) to generate an image-based height above ground level measurement based on the dense depth map (120) and the pose data by transforming the dense depth map (120) from a camera frame to a body frame coordinate system.

3. The system (100) of any of claims 1-2, wherein the one or more instructions (119), when executed by the one or more processors (108), further cause the one or more processors (108) to generate terrain data based on the dense depth map (120) and the pose data.

4. The system (100) of claim 3, wherein the one or more instructions (112, 114, 116), when executed by the one or more processors (108), further cause the one or more processors (108) to update terrain data in a terrain database (122) in real-time for situational awareness, path planning, obstacle avoidance, and/or emergency landing.

5. The system (100) of any of claims 1-4, wherein the one or more instructions (112, 114, 116), when executed by the one or more processors (108), further cause the one or more processors (108) to select the group of depth bins based on a previous height above ground level measurement.

6. The system (100) of any of claims 1-5, wherein the one or more processors (108) are configured to determine respective depth bins for at least two pixels in parallel.

7. The system (100) of any of claims 1-6, further comprising:
the image capturing device (102), wherein the image capturing device (102) is configured to capture the first image and the second image; and
the navigation system (104), wherein the navigation system (104) is configured to generate the pose data;
wherein the image capturing device (102), the navigation system (104), the one or more processors (108), and the non-transitory computer readable medium (110) are positioned on a vehicle.

8. The system (100) of claim 7, wherein a sample rate of the image capturing device (102) is adjusted based on a speed of the vehicle, a location of the vehicle, and/or a phase of travel.

9. The system (100) of claim 8, wherein the system (100) further comprises an altimeter (124) or other height above ground level sensor (126) configured to determine a second height above ground level measurement;
wherein the one or more instructions (112, 114, 116), when executed by the one or more processors (108), further cause the one or more processors (108) to:
combine the image-based height above ground level measurement and the second height above ground level measurement; and/or
compare the image-based height above ground level measurement and the second height above ground level measurement.

10. The system (100) of claim 1, wherein the image capturing device (102) is further configured to capture a third image;
wherein the one or more instructions (112, 114, 116), when executed by the one or more processors (108), further cause the one or more processors (108) to:
generate a second dense depth map (120) based on a second optical flow and a second rigid flow determined using the first image, the third image, and pose data corresponding to the first image and the third image;
comparing depth estimations for particular points in the dense depth map (120) and the second dense depth map (120); and
deleting or verifying the depth estimations based on the comparison.
